# EUROPÄISCHE PATENTSCHRIFT

(11) **EP 1 830 543 B1**
(45) Veröffentlichungstag und Bekanntmachung des Hinweises auf die Patenterteilung: **16.06.2010**
(21) Anmeldenummer: 07004094.4
(22) Anmeldetag: 28.02.2007
(51) Int. Cl.: H04M 1/21

(54) **Flüssigkeitssensoren für den Einbau in Mobiltelefonen**
Liquid sensors for installation in mobile telephones
Installation de capteurs de fluide dans des téléphones mobiles

(30) Priorität: 02.03.2006 DE 102006010251
(43) Veröffentlichungstag der Anmeldung: 05.09.2007
(73) Patentinhaber: Deutsche Telekom AG, 53113 Bonn (DE)
(72) Erfinder: Eschenbacher, Manfred, 91586 Lichtenau (DE)
(74) Vertreter: Riebling, Peter

(56) Entgegenhaltungen:
- DE-A1- 10 203 814
- DE-C1- 10 203 815
- JP-A- 2001 197 175
- JP-A- 2002 090 326
- JP-A- 2002 314 649

## Beschreibung

Die Erfindung betrifft verbesserte Flüssigkeitssensoren zum Nachweis von Flüssigkeitseintritt in Mobiltelefonen gemäß dem Oberbegriff des Patentanspruchs 1.

Derzeitige Mobilfunkgeräte sind nutzungsbedingt stärker als andere Produkte der Unterhaltungselektronik äußeren Schadenseinflüssen ausgesetzt.

Typische Schäden, welche durch mechanische Einwirkung, wie zum Beispiel durch Druck oder durch Sturz auftreten können, sind zum Beispiel der Bruch des LCD-Displays, der Bruch der Platine oder die Unterbrechung von elektrischen Kontakten.

Derartige mechanische Schäden sind bis auf wenige Ausnahmen im Rahmen einer Reparatur durch Austausch des betroffenen Bauteils im allgemeinen zu beheben.

Neben den mechanischen Einwirkungen führen sogenannte Flüssigkeitsschäden oftmals zur Zerstörung eines Mobiltelefons.

Anders als mechanische Schäden sind diese meist nicht direkt erkennbar. Im Falle eines Flüssigkeitsschadens dringt zum Beispiel eine Flüssigkeit durch die äußere Hülle eines Mobiltelefons und verursacht elektrische Schäden, wie zum Beispiel einen elektrischen Kurzschluss.

Ein typischer Flüssigkeitsschaden ist der elektrische Kurzschluss des mäanderförmigen Tastaturaufbaus durch das Eindringen von Flüssigkeit über das Tastenfeld.
Die Folge ist ein elektrischer Funktionsausfall einzelner Tasten des Tastaturfeldes eines Mobiltelefons.

Durch eingetretene Flüssigkeit beschädigte Mobiltelefone stellen in der Regel einen wirtschaftlichen Totalschaden dar, da eine Instandsetzung aufgrund relativ hoher Reparaturkosten ausscheidet.

Eine derartige Reparatur wird von Reparaturfachbetrieben abgelehnt, da die Flüssigkeit zwischen den Platinen-Schichten in den meisten Fällen weiterschreitende Korrosion verursacht.

Eine Reparatur bei einem wiederholten Mangel würde zu einer Schadensersatzleistung führen.

Somit stellen Flüssigkeitsschäden mit einem geschätzten Anteil von 20-25 % aller Schäden ein erhebliches wirtschaftliches Problem in der Mobüfunkbranche dar.

Die Kosten entstehen zum einen für Endkunden, die bei solchen Schäden ihr Mobiltelefon ersetzen müssen, zum anderen aber bei Mobilfunkbetreibern, Händlern und letztlich Herstellern durch die ungerechtfertigte Inanspruchnahme von Gewährleistungen und Garantien.

Einige Hersteller von Mobiltelefonen versuchen sich vor diesen Schäden zu schützen, indem Sie sogenannte Flüssigkeitsindikatoren in Mobiltelefone integrieren.

Ein derartiger Flüssigkeitsindikator wird derzeit in verschieden Mobiltelefonen eingesetzt, wie zum Beispiel von der Firma Samsung.

Diese einfachen Indikatoren sind kleine Papieraufkleber, die mit einer tintenähnlichen Flüssigkeit bedruckt sind.

Werden diese Indikatoren mit einer Flüssigkeit benetzt, verwäscht sich das aufgedruckte Muster und erlaubt den Rückschluss auf die unsachgemäße Handhabung, beispielsweise die Nutzung des Mobiltelefons im Regen.

Die Erkennung von Flüssigkeitseintritt in Mobiltelefonen mit den herkömmlichen Indikatoren weist jedoch eine Vielzahl von Nachteilen auf, welche im Folgenden näher genannt sind:
- Die Labels können durch einfaches Öffnen des Gehäuses von den Benutzern problemlos entfernt werden.
- Bei der Befestigung des Indikators am Akku wird dieser bei einem eventuellen Tausch des Akkus häufig mit ausgetauscht.
- Die Positionierung des Indikators im Akkufach erfasst nicht sämtliche Schäden, wie zum Beispiel ein Flüssigkeitseintritt über die Tastatur. Diese geschätzte Quote liegt bei ca. 70 bis 80 %.
- Die Indikatoren erlauben oft keine eindeutige Entscheidung, ob ein Flüssigkeitsschaden vorliegt oder nicht (subjektive Einschätzung).
- Die Indikatoren können unbeabsichtigt ausgelöst werden, zum Beispiel durch eine Berührung des Indikators beim Einlegen der SIM-Karte.
   ■ Indikatoren, die nicht außen am Gehäuse, sondern auf der Platine des Geräts angebracht sind, ermöglichen keine Identifikation bei der Reparaturannahme, sondern erst nach dem Öffnen des Geräts in der Reparatur.
- Herkömmliche Indikatoren erlauben keine zeitliche Zuordnung, wodurch Unklarheiten auftreten, wenn das Mobiltelefon von mehr als einem Benutzer benutzt wird.

Die DE 102 03 814 A1 offenbart ein mobiles Kommunikationsendgerät mit Mitteln zum Erkennen von leeren, eingesetzten Stromversorgungszellen, mit Mitteln zum Abschalten des mobilen Kommunikationsendgerätes bei einer Erkennung von leeren eingesetzten Stromversorgungszellen und mit Mitteln zum Anzeigen des Umstandes, dass die eingesetzten Stromversorgungszellen leer sind, wobei Mittel zum Erkennen von Feuchtigkeit im mobilen Kommunikationsendgerät vorgesehen Ist, welche eine Speichervorkehrung zum Festhalten des Umstandes einer Feuchtigkeitserkennung vorsieht und eine Abschaltvorkehrung zum wenigstens teilweisen Abschalten des mobilen Kommunikationsendgerätes bei Auftreten einer Feuchtigkeitserkennung vorsieht. Es ist eine Vorkehrung zum Feststellen der beiden Umstände vorgesehen, dass eine wenigstens teilweise Abschaltung des mobilen Kommunikationsendgerätes aufgrund einer Feuchtigkeitserkennung vorgenommen worden ist und dass das mobile Kommunikationsendgerät mit einer externen Stromversorgungsquelle verbunden worden ist mit der sich daran anschließenden Folge des Vorganges einer Stromaufnahme aus der Stromversorgungsquelle, und dass durch die Vorkehrung zum Feststellen der besagten beiden Umstände beim Feststellen der beiden besagten Umstände ein Modus eingeschaltet ist, durch welches das mobile Kommunikationsendgerät durch Stromaufnahme in eine Erwärmungsphase und hierdurch wiederum in eine Trocknungsphase gebracht ist. Ein eventueller Flüssigkeitseintritt in einem mobilen Kommunikationsendgerät kann hier durch einen Benutzer nur indirekt festgestellt werden kann, dadurch dass das mobile Kommunikationsendgerätes durch eine Unterbrechung der Spannungsversorgung außer Funktion gesetzt wird.

Die DE 102 03 815 C1 offenbart ein Mobiltelefon mit einem Flüssigkeitssensor, wobei der Flüssigkeitssensor aus mehreren Einzelsensoren besteht und wobei das Ereignis "Flüssigkeitseintritt im Mobiltelefon" zum Zwecke einer späteren Abfrage in einem sogenannten Logbuch eingetragen wird. Derartige Logbucheinträge sind dann von dem entsprechenden Servicepersonal zu einem späteren Zeitpunkt über eine geheime Tastensequenz abfragbar. Es liegt hier lediglich eine indirekte Anzeigefunktion eines eventuellen Flüssigkeitseintrittes in dem mobilen Kommunikationsendgerät vor.

Die JP 2001197175 A betrifft ein Auswertsystem einer Geräteausstattung für ein unvorhergesehenes Ereignis, wobei das unvorhergesehene Ereignis ein plötzlicher Wassereintritt In das Innere eines Gerätes ist. Die Überwachung wird mittels eines angeordneten Sensors durchgeführt, welcher den plötzlichen Wassereintritt überwacht und auf einem Displayteil automatisch darstellt. Diese Information kann ebenfalls automatisch zu einer vorbestimmten, festen Anzeigenbestimmung durch Verwendung eines Notfallanzeigemittels für eine Notfallreparatur oder Ähnliches verwendet werden.

Aufgabe der Erfindung ist es, einen Indikator für Flüssigkeiten für den Einsatz in Mobiltelefonen derart weiterzubilden, dass
■ eine in ein Mobiltelefon eingedrungene Flüssigkeit eindeutig nachgewiesen werden kann;
■ dass der Nachweis an allen relevanten Stellen eines Mobiltelefons erfolgt;
■ die Manipulationsmöglichkeiten durch Dritte möglichst ausgeschlossen sind;
■ das Ergebnis der Indikation dauerhaft und unzweifelhaft von Außen abgelesen werden kann;
■ das Ergebnis auch abgelesen werden kann, wenn das Mobiltelefon keinerlei elektrische Funktion mehr aufweist; und
■ dass eine eindeutige zeitliche Zuordnung des Schadens möglich ist.

Die Aufgabe der vorliegenden Erfindung wird dadurch gelöst, dass der Sensor an mindestens zwei unterschiedlichen Stellen im Innenraum des Gehäuses des Mobiltelefons angeordnet ist und einen optischen Nachweis von Flüssigkeitseintritt durch das Herstellen einer galvanischen Verbindung ausbildet.

Der hier beschriebene Sensor ist ein zum Stand der Technik bekannter Sensor zum Nachweis von Flüssigkeiten weiterentwickelter Sensor.

In einem ersten Ausführungsbeispiel ist der Sensor vorzugsweise auf dem obersten Platinen-Layer eines Mobiltelefons im Innenraum des Gehäuses angeordnet, wo sich die Tastaturkontakte befinden.

In einem weiteren Ausführungsbeispiel ist der Sensor an den Öffnungen im Bereich des Akkufachs beziehungsweise zusätzlich zu den Sensoren auf dem obersten Platinen-Layer angeordnet.

In einem weiteren Ausführungsbeispiel ist der Sensor an allen anderen, abhängig von den der Bauform orientierten Stellen, an welchen Flüssigkeit eindringen kann, angeordnet, wie zum Beispiel an den Öffnungen für Lautsprecher, Mikrofon, SD-Card-Einschub und/oder ähnlichem.

Vorzugsweise ist der Innenraum des Gehäuses eines Mobiltelefons mit vier bis fünf Sensoren ausgestattet, wodurch eine eindeutige Indikation eines eventuellen Flüssigkeitseintritts gewährleistet ist.

Die Konstruktion der Sensoren ist derart ausgelegt, dass eine versehentliche Aktivierung der Sensoren durch eine Berührung während der Produktion oder bei der Reparatur von Mobiltelefonen verhindert wird.

In einer bevorzugten Ausführungsform wird der Nachweis eines Flüssigkeitseintritts in einem Mobiltelefon mit Sensoren durchgeführt, welche zum Beispiel die Herstellung einer galvanischen Verbindung erlauben.

Derartige Sensoren sollten bevorzugt auf dem obersten Platinen-Layer (Tastaturkontakte), an Öffnungen im Bereich des Mikrofons, des Lautsprechers und des SD-Card-Einschubes angeordnet sein. Bei einem eventuellen Flüssigkeitseintritt in den Gehäuseinnenraum des Mobiltelefons ist dieser durch die Herstellung einer galvanischen Verbindung auch zu einem späteren Zeitpunkt nachweisbar.

Die erfindungsgemäßen und mehrfach angeordneten Sensoren in einem Mobiltelefon weisen eine logische Schaltung als "Oder-Verknüpfung" auf, wobei es zur Indikation ausreicht, wenn mindestens einer der Sensoren mit einer Flüssigkeit kontaktiert wurde.

Darüber hinaus führt das Auslösen eines der als "Oder-Verknüpfung" geschalteten Sensoren zu insgesamt zwei verschiedenen Anzeigezuständen, welche dauerhaft geführt sind.

Ein erster Anzeigezustand ist die visuelle Anzeige im Servicemenü des Mobiltelefons. Diese Anzeige wird z.B. durch eine verdeckte Tastenfolge erreicht, welche unter anderem die installierte Softwareversion des Mobiltelefons anzeigt. Dieser Menüpunkt wird im Falle einer Reparaturannahme aufgerufen und zeigt bei einem vorhergehenden Flüssigkeitseintritt in das Mobiltelefon zum Beispiel die Information "Water damage-Date: TT.MM.JJJJ" an.

Ein zweiter Anzeigezustand ist die dauerhafte optische Anzeige eines verursachten Flüssigkeitsschadens unabhängig von der Funktionsfähigkeit des Gerätes. Diese Anzeige erlaubt eine einfache Erkennung durch das Servicepersonal ohne jegliche Handlung am Mobiltelefon selbst sowie eine Anzeige auch ohne Funktion des Gerätes. Dies wird daher begründet, dass schwerwiegende Flüssigkeitsschäden Mobiltelefone oftmals komplett außer Funktion setzen.

Diese vorbenannte Anzeige erfolgt in Form einer unveränderlichen Farbsignalisierung, wie zum Beispiel grün/rot im Akkufach, wobei diese Funktion einer Farbsignalisierung nicht umkehrbar ist. Alternativ hierzu wäre eine dauerhafte Symboldarstellung der LCD-Anzeige vorstellbar.

Somit ist eine eindeutige Indikation eines eventuellen Flüssigkeitseintritts in einem Mobiltelefon aufgrund des vorbenannten Ausführungsbeispieles gewährleistet.

Die Erfindung soll nicht ausschließlich auf den Einsatz von derartigen Sensoren zum Nachweis eines Flüssigkeitseintritts für Mobiltelefone beschränkt werden.

Vielmehr ist der Einsatz der erfindungsgemäßen Sensoren auch für weitere elektronische Geräte vorgesehen, welche durch unsachgemäße. Verwendung einen eventuellen Flüssigkeitseintritt erleiden, welcher zu einem Defekt des Gerätes führt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Dabei zeigen:
- Figur 1:: Die schematische Darstellung von möglichen Platzierungspunkten der Sensoren in einem Mobiltelefon
- Figur 2:: Eine schematische Darstellung eines Sensors nach einem Flüssigkeitseintritt;

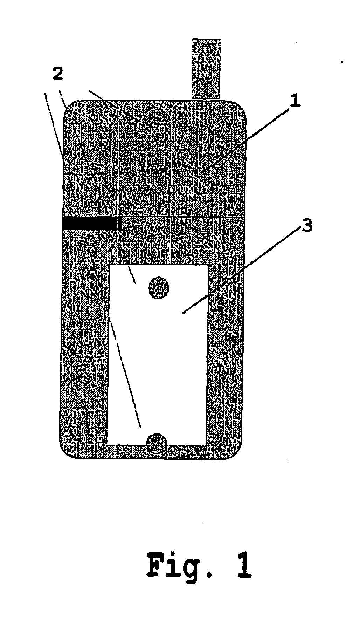

Das in Figur 1 dargestellte Mobiltelefon 1 zeigt die Anordnung von den erfindungsgemäßen Sensoren 2 in einem Mobiltelefon 1.

Hierbei zeigt die Anordnung der Sensoren 2 lediglich Beispiele zur Anordnung, wie zum Beispiel direkt unterhalb des Akkus 3, im Bereich des Übergangs zwischen Akku 3 und Gehäuseinnenobertläche des Mobiltelefons 1, oder im oberen oder unteren Gehäusebereich des Mobiltelefons 3. Die Anzahl der anzuordnenden Sensoren 2 ist frei wählbar, je nach spezifischer Anforderung der zu überwachenden Positionen für einen eventuellen Flüssigkeitseintritt in einem Mobiltelefon 1.

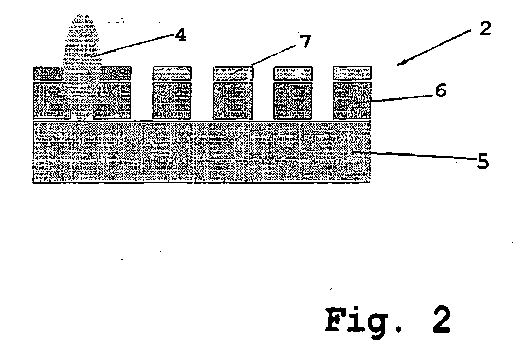

Der in Figur 2 dargestellte Sensor 2 ist derart ausgebildet, dass eine anwendungsbezogene Anordnung mit geringstem Platzbedarf in einem Mobiltelefon gewährleistet ist. Idealerweise stellt der Sensor 2 kein separates elektronisches Bauteil dar, sondern ist integriert in andere Komponenten.

Beim Auftreffen einer Flüssigkeit auf den Sensor 2, wie zum Beispiel Wasser, bilden die metallischen eine galvanische Verbindung aus, welche eine entsprechende Signalisierung zur optischen Indikation im Servicemenü des Mobiltelefons mittels einer entsprechenden Software ausbildet.

Die mit einer logischen Schaltung als "Oder-Verknüpfung" verbundenen Sensoren 2 lösen bei Kontakt mit einer Flüssigkeit insgesamt zwei unterschiedliche optische Anzeigezustände aus, wobei ein erster optischer Anzeigezustand dauerhaft ist, unabhängig von der Funktion des Mobiltelefons und ein zweiter Anzeigezustand über eine Tastenkombination oder eine verdeckte Tastaturfolge aus dem Servicemenü des Mobiltelefons abgerufen wird.

Eine derartige Software erfasst und speichert Zeitinformationen aufgrund der entsprechenden Signalisierung mittels der ausgebildeten galvanischen Verbindung, welche bei entsprechendem Abruf der Information, zum Beispiel über eine verdeckte Tastenfolge oder Eingabe eines Nummerncodes auf dem Display des Mobiltelefons angezeigt wird.

### Bezugszeichenliste

- 1: Mobiltelefon
- 2: Sensor
- 3: Akku
- 4: Flüssigkeit
- 5: Trägerschicht
- 6: Farbeinschluss
- 7: metallischer Stoff

## Patentansprüche

1. Flüssigkeitssensor für den Einbau in einem Mobiltelefon zur Indikation von einem Flüssigkeitseintritt, wobei der Sensor beim Auftreffen einer Flüssigkeit eine optische Indikation ausbildet, **dadurch gekennzeichnet, dass** der Sensor (2) an mindestens zwei unterschiedlichen Stellen im Innenraum des Gehäuses des Mobiltelefons angeordnet ist und einen optischen Nachweis von Flüssigkeitseintritt durch das Herstellen einer galvanischen Verbindung in der Schicht des Sensors (2) mittels entstehender elektrischer Spannung ausbildet und mindestens zwei unterschiedliche optische Anzeigezustände ausbildet.

2. Flüssigkeitssensor nach Anspruch 1, **dadurch gekennzeichnet, dass** der Sensor (2) einen optischen Nachweis eines Flüssigkeitseintritts in dem Innenraum eines Gehäuses eines Mobiltelefons mittels eines Farbeinschlusses an der Oberfläche ausbildet.

3. Flüssigkeitssensor nach Anspruch 1 und 2, **dadurch gekennzeichnet, dass** der Sensor (2) als separates Bauteil oder als ein in die Außenhülle eines existierenden Bauteils integriertes Bauteil ausgeführt ist und an modellspezifisch notwendigen Stellen platziert wird.

4. Flüssigkeitssensor nach den Ansprüchen 1 bis 3, **dadurch gekennzeichnet, dass** der Sensor (2) mit weiteren angeordneten Sensoren (2) eine logische Schaltung als "Oder-Verknüpfung" aufweist.

5. Flüssigkeitssensor nach den Ansprüchen 1 bis 4, **dadurch gekennzeichnet, dass** die mindestens zwei unterschiedlichen Anzeigezustände mittels integrierter Software des Mobiltelefons ausgebildet sind, wobei ein erster optischer Anzeigezustand unabhängig von der Funktion des Mobiltelefons dauerhaft ausbildet ist.

6. Flüssigkeitssensor nach den Ansprüchen 1 bis 5, **dadurch gekennzeichnet, dass** ein zweiter Anzeigezustand eine Anzeige über den verursachten Flüssigkeitseintritt mittels einer Tastenkombination oder einer verdeckten Tastaturfolge aus dem Servicemenu des Mobiltelefons abrufbar ausgebildet ist.

7. Flüssigkeitssensor nach den Ansprüchen 1 bis 6, **dadurch gekennzeichnet, dass** der mindestens zweite Anzeigezustand nach Abruf aus dem Servicemenu des Mobiltelefons eine Zeitinformation auf dem Display des Mobiltelefons anzeigt, welche bei einem vorhergehenden Flüssigkeitseintritt und Bildung eines elektrischen Signals in der integrierten Software des Mobiltelefons erfasst und gespeichert ist.

8. Flüssigkeitssensor nach den Ansprüchen 1 bis 7, **dadurch gekennzeichnet, dass** der mindestens zweite Anzeigezustand nach Abruf aus dem Servicemenu des Mobiltelefons eine Wortmeldung im Display des Mobiltelefons zur Anzeige bringt, welche einen eindeutigen Hinweis auf einen vorhergehenden Flüssigkeitseintritt ausbildet.

## Claims

1. Liquid sensor for installation in a mobile telephone to indicate liquid entry, wherein the sensor forms an optical indication when meeting a liquid, **characterised in that** the sensor (2) is arranged at least at two different sites in the interior of the housing of the mobile telephone and forms optical proof of liquid entry by the production of a galvanic connection in the layer of the sensor (2) by means of electrical voltage being produced and forms at least two different optical display states.

2. Liquid sensor according to claim 1, **characterised in that** the sensor (2) forms optical proof of liquid entry in the interior of a housing of a mobile telephone by means of colour inclusion on the surface.

3. Liquid sensor according to claim 1 and 2, **characterised in that** the sensor (2) is designed as a separate component or as a component integrated into the outer shell of an existing component and is placed at necessary sites which are specific to the model.

4. Liquid sensor according to claims 1 to 3, **characterised in that** the sensor (2) with further sensors (2) provided has a logic circuit as "or operation".

5. Liquid sensor according to claims 1 to 4, **characterised in that** the at least two different display states are formed by means of integrated software of the mobile telephone, wherein a first optical display state is formed to be durable independently of the function of the mobile telephone.

6. Liquid sensor according to claims 1 to 5, **characterised in that** a second display state, a display about the liquid entry caused, is formed to be requestable from the service menu of the mobile telephone by means of a key combination or a hidden keypad sequence.

7. Liquid sensor according to claims 1 to 6, **characterised in that** the at least second display state indicates time information on the display of the mobile telephone after request from the service menu of the mobile telephone, which is registered and stored in the integrated software of the mobile telephone in the case of preceding liquid entry and formation of an electrical signal.

8. Liquid sensor according to claims 1 to 7, **characterised in that** the at least second display state, after request from the service menu of the mobile telephone, indicates a verbal report in the display of the mobile telephone which forms an unambiguous indication of preceding liquid entry.

## Revendications

1. Capteur de liquide à monter dans un téléphone mobile pour indiquer une entrée de liquide, le capteur formant une indication optique au cas où un liquide arrive, **caractérisé en ce que** le capteur (2) est disposé à au moins deux endroits différents à l'intérieur du boîtier du téléphone mobile et forme une preuve optique de l'entrée de liquide grâce à la réalisation d'une liaison galvanique dans la couche du capteur (2) à l'aide d'une tension électrique qui apparaît, et forme au moins deux états d'affichage optiques différents.

2. Capteur de liquide selon la revendication 1, **caractérisé en ce que** le capteur (2) forme une preuve optique d'une entrée de liquide à l'intérieur d'un boîtier d'un téléphone mobile, à l'aide d'une inclusion de couleur à la surface.

3. Capteur de liquide selon les revendications 1 et 2, **caractérisé en ce que** le capteur (2) est conçu comme un composant séparé ou comme un composant intégré dans la gaine extérieure d'un composant existant et est placé à des endroits qui sont nécessaires spécifiquement pour le modèle.

4. Capteur de liquide selon les revendications 1 à 3, **caractérisé en ce que** le capteur (2) présente avec d'autres capteurs (2) un circuit logique sous la forme d'une "opération OU".

5. Capteur de liquide selon les revendications 1 à 4, **caractérisé en ce que** les deux états d'affichage différents, ou plus, sont formés à l'aide d'un logiciel intégré du téléphone mobile, un premier état d'affichage optique étant formé durablement indépendamment du fonctionnement du téléphone mobile.

6. Capteur de liquide selon les revendications 1 à 5, **caractérisé en ce qu'**un deuxième état d'affichage signalant l'entrée de liquide provoquée est conçu pour pouvoir être appelé à partir du menu de service du téléphone mobile à l'aide d'une combinaison de touches ou d'une séquence de touches cachée.

7. Capteur de liquide selon les revendications 1 à 6, **caractérisé en ce que** le deuxième état d'affichage, au moins, affiche sur l'écran du téléphone mobile, après avoir été appelé à partir du menu de service du téléphone mobile, une information de temps qui, en cas d'entrée de liquide précédente et de formation d'un signal électrique, est enregistrée et mise en mémoire dans le logiciel intégré du téléphone mobile.

8. Capteur de liquide selon les revendications 1 à 7, **caractérisé en ce que** le deuxième état d'affichage, au moins, affiche dans l'écran du téléphone mobile, après avoir été appelé à partir du menu de service du téléphone mobile, un message composé de mots qui forme une indication claire d'une entrée de liquide précédente.
